# EUROPEAN PATENT SPECIFICATION

(11) **EP 2 207 361 B1**
(45) Date of publication and mention of the grant of the patent: **16.11.2016**
(21) Application number: 10150140.1
(22) Date of filing: 05.01.2010
(51) Int. Cl.: H04N 17/04

(54) **A test system and method for imaging devices**
Testsystem und Verfahren für Bildgebungsvorrichtungen
Système de test et procédé pour dispositifs d'imagerie

(30) Priority: 09.01.2009 TR 200900178
(43) Date of publication of application: 14.07.2010
(73) Proprietor: Vestel Elektronik Sanayi ve Ticaret A.S., 45030 Manisa (TR)
(72) Inventor: Koyuncu, Aydin, 45030, Manisa (TR); Tüzün, Levent, 45030, Manisa (TR)
(74) Representative: Cayli, Hülya

(56) References cited:
- GB-A- 2 429 868
- JP-A- 2007 214 991
- US-A- 4 322 749
- US-A- 5 956 022
- US-A1- 2005 168 458

## Description

### Field of the Invention

The present invention is related with a method and system to test video-output devices such as televisions, DVD players, satellite receivers (DVB) and the systems such as tuner development cards which have not been turned into devices yet; to detect and inform certain problems during the test such as macro-blocking, frame skip, and loss of image data which may occur during the design phase, and to detect the performances in different conditions without requiring manual intervention.

### Background of the Invention

Various problems such as macro-blocking, frame skip and loss of image data that result from production flaws can be encountered on video output devices and systems. The identification of the deformations on image data is an important issue in designing video output devices and systems. The determinations regarding the deformations of the image data are required to be made during different stages of the design verification of the designed device.

Macro-blocking is the loss of macro-block information that expresses a block of 16x16 pixels in image compression literature due to various reasons. If such a flaw occurs, the actual segments of the picture on the square zones of the screen are replaced with single-color blocks or annoying, angled low-resolution blocks.

Frame skip is skipping image frames which cannot be created because of loss of image data due to various reasons during the decompression of the compressed image. In this case, the invisible image frames are replaced with the previous frame and the image on the screen freezes for a very short time.

The automatic test system and method according to this invention has been designed to capture and inform such image problems in a simple and fast manner.

The relevant background art includes various commercial applications which were produced to be used during the design verification stage and at other required places. However, most of such systems are quite complex devices which cause loss of time and finances. Certain systems simulate the results of different graphic processing algorithms such as compression by the vision of the human eye and use it in verification and present a highly complex and expensive application.

The automatic test system explained in the patent application US5956022A1 has a microprocessor based control unit and that control unit detects H-sync (horizontal synchronization) and V-sync (vertical synchronization) signals from the computer's video card. In the case that the control unit cannot detect synchronization signals, a series of error detection steps that should be followed by the user are monitored; so, other required information are obtained from the user interface and memory, and the error is detected. However, on the mentioned circuit, the use of circuit elements such as D/A (Digital/Analog) convertor, deflection circuit is required and the utilized method causes to loss of time and cost as it is a complex method.

The prior art document US 2005/0168458 A1 discloses a panel driving circuit, which is capable of generating test patterns to drive the panel. The circuit may also receive external test signals. However the disclosed system does not provide any solution to obtain tests.

The prior art document JP 2007/214991 A discloses an image quality measuring apparatus, which calculates error condition values for several test criteria (i.e. frame skip condition) and calculates evaluation value for the display using error condition values. The document discloses system for overall evaluation of test results for a display. However, the document does not provide any automated test system and/or method for calculation of error condition values.

Another prior art document GB 2429868 A discloses a color adjustment system for a display device. A transmitter device is connected to display device via two lines, the transmitting line and the receiving line. While a color image data (multiplexed rectangles) is sent via transmitting line, the image data is monitored by the transmitter device using receiving line. Color adjustments are done in accordance with monitored data. However stated system does not provide a solution for frame skip or macro-blocking problem.

The prior art document US 4322749 B discloses a television test signal generator, which generates a test signal comprising sinusoidal component with varying phase. The method is said to enable complex quality tests with said signal. However no specific test system is disclosed for detection of frame-skip or macro-blocking problems.

Another prior art document US 2005/0225639 A1 discloses a test method in which, a test pattern is determined for a display having specific resolution. As the pattern is displayed, the perceived brightness is compared to the brightness and the frequency of the test pattern is varied until a perceived brightness is acceptable. The document discloses a general display test method and does not provide information about frame skip problems.

In the test system described in the patent application US5614944, the H-Sync and V-Sync signals of the image enter a control circuit and they are measured according top pre-defined criteria; various tests are applied if the measured values are good, and the error is detected according to the results of these tests. However this system contains a complex circuit structure and algorithm.

### Purpose of invention

The method according to this invention aims to make the long-efforts-requiring detection stage of image data problems a cost-effective and simple process by using a simple micro-controller and minimum number of signal processing circuits.

Another aim of the invention is to develop a test system in which the test system according to the invention is used, and the image data problems are identified in a low-cost and simple way.

### Description of the drawings

Figure 1 contains a sample block diagram which shows the test system according to the invention.
Figure 2a shows the main flow chart of the software of the developed test system.
Figure 2b shows the flow chart of the function of the micro-controller used in the system according to the invention.
Figure 2c shows the flowchart of function cutting function.
Figure 3 shows the line interrupt flowchart.
Figure 4 the elevation of the test signal used in the system.

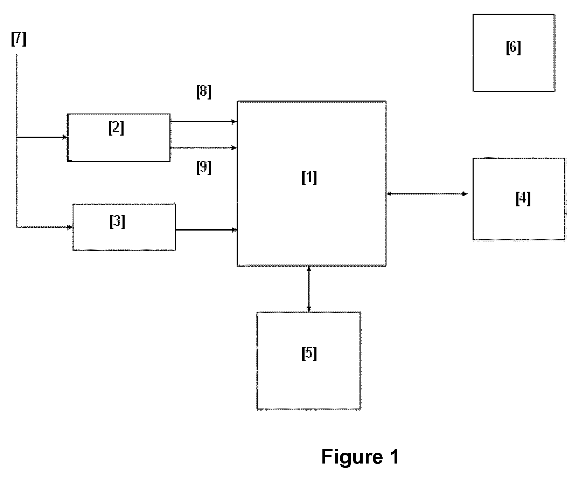

The pieces in Figure 1 are numbered individually and the following items are represented by the corresponding numbers.
Micro-controller (1)
Synchronization splitter circuit (2)
Signal regulator circuit (3)
PC interface circuit (4)
User interface circuit (5)
Power supply unit (6)
Video input (7)
Horizontal synchronization signal (8)
Vertical synchronization signal (9)

### Detailed description of the invention

The method and system according to the invention is used in everywhere when the test signal flaw is required to be monitored during the design of mainly video output devices and the verification stage of the design.

Figure 1 contains a sample elevation of the test system according to the invention. The components in the drawing and the mode of operation of the method according to the invention are described as follows:
- Micro-controller (1) detects the problems on the image by using the received image data and the synchronization data; sets the status of operation according to the data obtained from the user interface (5) and the connected computer; also sends information to the user interface (5) and computer regarding the image flaws.
- The synchronization splitter circuit (2) separates vertical and horizontal synchronization signals (9, 8) from the test signal, and sends them to the micro-controller (1).
- The signal regulator circuit (3) contains circuits such as buffer and level shifter which is the section that adjusts the correct flow component of the test signal, for the micro-controller (1) to easily detect the test signal.
- The computer interface circuit (4) is the circuit that conducts the required signal conversions for the micro-controller (1) to communicate with the computer. Here, communication protocols such as RS232, USB can be used according to the capability of the micro-controller (1) employed.
- The user interface circuit (5) provides an interface between the user and micro-controller (1). This circuit may contain a key pad and LCD (Liquid Crystal Display). Here, the user may make the settings related with the operation of the micro-controller, and monitor the warnings of the micro-controller (1).
- The power supply unit (6) supplies the power required by the circuit from the mains supply or other resources.

Micro-controller (1) detects the problems on the image by using the image data received from the user interface (5) and the connected computer; sets the status of operation and sends the data related with image flaws to the user interface (5) and/or the connected computer.

If the test signal is a very high frequency signal, the analog-digital conversion must be made very fast for the micro-controller (1) to detect this signal, and the signal must be converted into digital data. Besides, for the micro-controller (1) to attain such a fast analog-digital conversion and to operate the required algorithms, it is required to have a very high process speed. The perception of a complex image data by the micro-controller (1) is very difficult.

For a simple micro-controller (1) which runs at the speeds that might be considered as low for this kind of applications, it is very difficult to distinguish the flaws on any signal received from the image input (7).

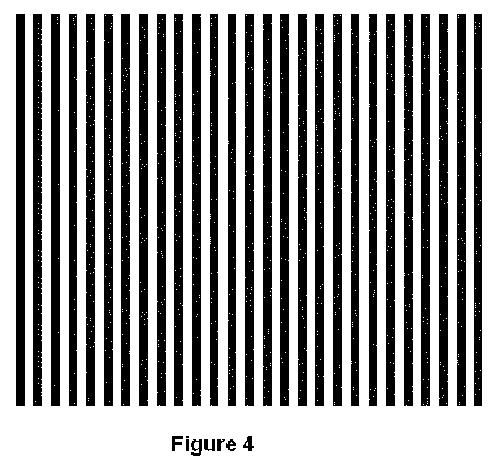

In the method according to the invention, a test signal developed for the micro-controller (1) to easily distinguish the flaws on the test signal is used. The test signal used in the method according to the invention, has been highly simplified as can also be seen in Figure 4, and it consists of vertical successive black and white lines.

CVBS (Composite Video Burst Signal) signal consists of various components such as the synchronization signals required to create the image on the screen, line brightness data, burst signal (reference used in identifying colors), and the color data of the dots on the line. When the test signal shown in Figure 4 is examined with an oscilloscope, each line signal will appear as a square wave between high and low signal level, apart from the synchronization signals. The reason is, in the test signal that consists of black and white, black color is shown with minimum signal level and white color with maximum signal level.

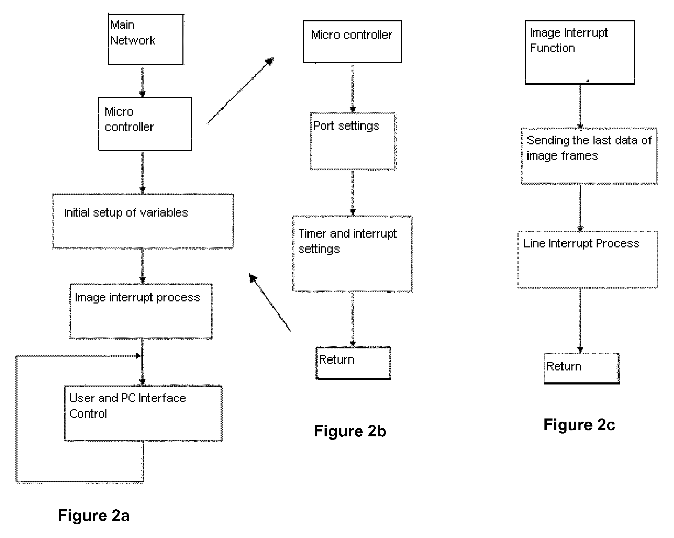

As the image data consists of black and white strips (bars), the signal for each line varies as high (H) and low (L) and in this case, the micro-controller (1) is not required to convert analog to digital. (Figure 2 a,b,c)

However, a solution cannot be provided for distinguishing macro-blocking and frame skip problems when the image is used as static. In Figure 4, the detection of the mentioned problems is achieved with the preparation and activation of the test signal as an image flow towards right. With the activation of the image (flowing to the right), the pixels on the screen change in time, and so, potential macro-blocking and frame skip errors are easily captured.

As many micro-controllers (1) fail to process negative signals, these signals must be distinguished. Signal regulating circuit (3) adds positive DC component to the incoming test signal at the entrance of the circuit and cleans it from negative signals. The signal regulator circuit (3) contains circuits such as buffer and level shifter for the micro-controller (1) to easily detect the test signal. Buffer is applied to the signal with modified DC level, and the deformation of input signal is prevented. The signal at the buffer output is applied to the micro-controller (1).

The image input signal applied to the signal regulator circuit (3) is synchronously applied to the synchronization splitter circuit (2). The synchronization splitter circuit (2) splits vertical and horizontal synchronization signals (9 and 8) of the test signal, and sends them to the micro-controller (1).

Horizontal and vertical synchronization signals (8, 9) are implemented to the related pin interrupt in the micro-controller (1), and the micro-controller (1) is enabled to detect the signal changes, stop the normal flow of the software in case of an error, and activate the software that would inform/resolve the error.

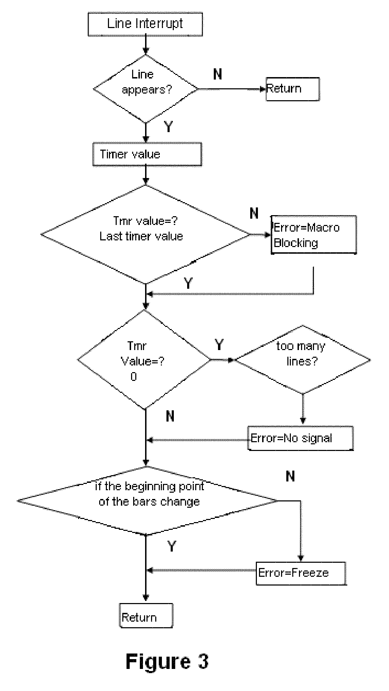

From the incoming vertical synchronization signal (9), a new frame will be scanned, while the starts of rows are detected on the horizontal synchronization signal (8) (Figure 3).

DC component is modified and the test signal that passes through the buffer is implemented to the external timer inlet of one of the internal timers of the micro-controller (1). When the micro-controller (1) first receives the horizontal synchronization signal (8), it waits for the burst signal to end and resets the timer, so the initial settings required for the micro-controller (1) to work properly is adjusted.

When the test signal that consists of black & white vertical strips is implemented to the clock inlet of the timer in the micro-controller (1), the timer begins to count the changes in the black and white levels, and count them as much as the vertical strips in the test signal. The number of vertical strips in the test signal implemented as moving towards right may change in time as per frame as sometimes, since half of a strip may be located at the start of line, and the other half at the end; however the number of vertical strips on each line of a frame are the same.

Micro-controller (1) first records the number on the timer and then resets the timer at the end of each line, that is, when a new horizontal synchronization signal (8) is received. So, it saves each line value and checks whether they are equal to each other. If the numbers obtained from the lines do not match each other, then it is understood that there is a problem such as macro-blocking.

As the image frames which consist of vertical strips are active, time between each horizontal synchronization signal (8) and the passage point from the first black to white or white to black passes after that signal changes as the strips move.

Micro-controller (1) controls this change in every frame, and checks whether the image has freezes or not. At the end of each frame, the data related with the problem is transferred to the computer. Besides, the reception of zero value from the lines in the related sections of the frame and/or the reception of different values from the middle section indicate that "No Signal" message appears on the screen. (Figure 3)

With the method developed by this invention, the problems that may appear on the test signal are easily identified thanks to an 8-bits micro-controller (1) at a low-speed operation and with simple software.

The descriptions of the flowcharts in Figure 2a, b and c are as follows.

The flow chart in Figure 2a shows the main function which is used for setting/realizing the initial setup required for proper functioning of the micro-controller (1), the selection of the utilized ports as input & output, and the modes and values of operation of the internal modules such as the RS232, and the timer.

After the initial value definitions of the variables used in the micro-controller (1) are made as shown in Figure 2b, the settings of the interrupts used are set and opened. Then it enters an eternal loop. In this infinite loop, the related transaction is performed according to the button control and the pushed button, and the information is brought on the LCD monitor.

When the related interrupt condition occurs as irrelevant from the main function of the interrupt function shown on Figure 2c, the micro-controller (1) stops its normal flow and starts this function. For example, with the detection of a signal which shows that a new image begins on the screen, the micro-controller (1) stops its normal flow and turns on the image interrupt function. It resumes its normal flow after completing this function. In this interrupt function, the information regarding which image is the examined image is, and line interrupt is activated.

The automatic test system and method according to this invention can be used for reducing human error in the test systems used during the design and design verifications of video output devices and to automate the test systems. This solution provides a quite simpler and cheaper solution than other commercial systems.

## Claims

1. A method for testing video output devices, comprising the following steps of
• receiving a test signal from a video output device to be tested via a video input (7),
• adjusting the DC levels of received test signal,
• separating the vertical and horizontal synchronization signals (9, 8) of the received test signal,
• transmitting the vertical and horizontal synchronization signals (9, 8)and adjusted test signal to a micro-controller (1),
• identification of the macro-blocking and frame skip problems on the image input signal by micro-controller (1) using said synchronization signals (9, 8)and adjusted test signal,
and **characterized in that**
• said micro controlled (1) does not include an analog-to-digital ADC converter and identifies the macro-blocking and frame skip problems on the image by using said synchronization signals (9, 8) and adjusted image input signal without needing to convert to digital.
• The mentioned test signal consists of vertical black & white strips moving towards right and is implemented to a clock inlet of a timer in the micro-controller (1),
• In the adjustment step, positive DC component is added to the mentioned test signal at a circuit inlet of a signal regulating circuit (3), and it is cleared off negative signals, and transmitted to the micro-controller (1),
• The change of black & white levels of the test signal in the micro-controller (1) is counted by the timer as number of vertical strips in the test signal implemented as moving towards right and each line value is saved when a new horizontal synchronization signal (8) is received,
• For a frame, comparing saved lines values in order to identify macro-blocking,
• For every frame, calculating the time difference between each horizontal synchronization signal (8) and the passage point from the first black to white or white to black change in order to identify image freeze.

2. A method according to Claim 1, **characterized in that** the start of a new frame is detected from the vertical synchronization signal (9).

3. A method according to Claim 1, **characterized in that** the starts of lines are detected from incoming horizontal synchronization signal (8).

4. A method according to Claim 1, **characterized in that** the mentioned synchronization signals are split by a synchronization splitter circuit (2).

5. A method according to Claim 1, **characterized in that** the split horizontal and vertical synchronization signals (8 and 9) are implemented to the pin interrupt inputs of the micro-controller (9).

6. A method according to Claim 1, **characterized in that** the test signal output is held subject to level shifting and buffering actions by a signal regulator circuit (3) before being transmitted to the micro-controller (1).

7. It is a method according to Claim 1, **characterized in that** the mentioned micro-controller (1) identifies that there is a macro-blocking problem if the number of vertical strips on each line does not match each other.

8. A method according to Claim 1, **characterized in that** the micro-controller (1) detects "no signal"' message on the screen when the timer counts zero value on the lines of the frame and/or counts other values than those in the central part of the image.

9. A test system developed for video output devices during design stages, **characterized in that** it comprises
• A video input (7), for receiving a test signal from a video output device to be tested,
• A signal regulator circuit (3), which adjusts the DC levels of received test signal,
• A synchronization splitter circuit (2), which separates the vertical and horizontal synchronization signals (9, 8) of the received test signal,
• A micro-controller (1), which receives vertical and horizontal synchronization signals (9, 8) and adjusted test signal, which identifies the macro-blocking and frame skip problems on the image input signal using said synchronization signals (9, 8)and adjusted test signal.
Wherein,
• Said micro controller (1) does not include an analog-to-digital ADC converter and identifies the macro-blocking and frame skip problems on the image by using said synchronization signals (9, 8) and adjusted image input signal without needing to convert to digital,
• The mentioned test signal consists of vertical black & white strips moving towards right and is implemented to a clock inlet of a timer in the micro-controller (1),
• In the signal regulator circuit (3), positive DC component is added to the mentioned test signal at a circuit inlet of a signal regulating circuit (3), and it is cleared off negative signals, and transmitted to the micro-controller (1),
• The change of black & white levels of the test signal in the micro-controller (1) is counted by the timer as number of vertical strips in the test signal implemented as moving towards right and each line value is saved when a new horizontal synchronization signal (8) is received,
• For a frame, comparing saved lines values in order to identify macro-blocking,
• For every frame, calculating the time difference between each horizontal synchronization signal (8) and the passage point from the first black to white or white to black change in order to identify image freeze

10. A system according to Claim 9, **characterized in that** said user interface comprises a keypad and LCD (Liquid Crystal Display) monitor,

11. A system according to Claim 9 or Claim 10 **characterized in that** an 8-bits micro-controller (1) is used to detect the problems that may appear in the test signal.

## Patentansprüche

1. **Verfahren zum Testen** von Video-Ausgangsgeräten mit den folgenden Schritten
- Erhalten oder Empfangen eines Testsignals von einem zu testenden Video-Ausgangsgerät, über einen Video-Eingang (7);
- Einstellen der DC-Pegel des empfangenen Testsignals;
- Trennen von Vertikal- und Horizontal-Synchronsignal (9, 8) des erhaltenen Testsignals;
- Übertragen des Vertikal- und des Horizontal-Synchronsignals (9, 8) und des angepassten Testsignals an einen Mikro-Controller (1);
- Identifizieren des Makro-Block- und des Frame-Skip-Problems an dem oder in dem Bild-Eingangssignal durch den Mikro-Controller (1), unter Verwendung der Synchronsignale (9, 8) und des eingestellten oder angepassten Testsignals;
und **dadurch gekennzeichnet, dass**
- der Mikro-Controller keinen Analog-Digital-Wandler (ADC) aufweist und das Makro- Blockier- und das Frame-Skip-Problem in dem Bild durch Verwenden der Synchronsignale (9, 8) und des angepassten oder eingestellten Bild-Eingangssignals ohne Notwendigkeit der Konvertierung ins Digitale identifiziert;
- das Testsignal aus vertikalen schwarzen und weißen Streifen besteht, die sich nach rechts bewegen, und einem Clock-Eingang eines Timers im Mikro-Controller (1) zugeführt wird;
- in dem Einstellschritt eine positive DC-Komponente zu dem Testsignal addiert wird, und zwar von oder in einem Schaltungseingang einer Signal-Steuerschaltung (3), und es von negativen Signalen befreit wird, und zu dem Mikro-Controller (1) übertragen wird;
- der Wechsel von schwarzen und weißen Pegeln im Testsignal von dem oder in dem Mikro-Controller (1) von einem Timer gezählt wird, als Zahl von vertikalen Streifen in dem Testsignal, das sich nach rechts bewegend gestaltet ist, und jeder Zeilenwert gespeichert wird, wenn ein neues Horizontal-Synchronsignal (8) empfangen oder erhalten wird;
- für einen Frame, die gespeicherten Zeilenwerte verglichen werden, um ein Makro-Blocking zu identifizieren;
- für jeden Frame die Zeitdifferenz zwischen jedem Horizontal-Synchronsignal (8) und dem Durchgangs- oder Wechselpunkt berechnet wird, was der Wechsel vom ersten Schwarzen zum Weißen oder von Weiß zu Schwarz ist, um ein Image-Freeze (Bildstillstand) zu erkennen.

2. Verfahren nach Anspruch 1, **dadurch gekennzeichnet, dass** der Start eines neuen Frames aus dem vertikalen Synchronisationssignal (9) erhalten oder erfasst wird.

3. Verfahren nach Anspruch 1, **dadurch gekennzeichnet, dass** die Anfänge der Zeilen erfasst oder erhalten werden von einem eingehenden Horizontal-Synchronsignal (8).

4. Verfahren nach Anspruch 1, **dadurch gekennzeichnet, dass** die genannten Synchronisationssignale geteilt oder aufgeteilt werden durch eine SynchronisationsSplitterschaltung (2).

5. Verfahren nach Anspruch 1, **dadurch gekennzeichnet, dass** die aufgeteilten Horizontal- und Vertikal-Synchronsignale (8,9) zu den Pin-interrupt-Eingängen des Mikro- Controllers (1) zugeführt werden eingesetzt oder angepasst sind.

6. Verfahren nach Anspruch 1, **dadurch gekennzeichnet, dass** der Testsignal-Ausgang(signal) - abhängig von Pegelshift- und Pufferaktionen (level shift und buffer) - von einer Signal-Regelschaltung (3) gehalten wird, bevor es an den Mikro- Controller (1) übertragen oder weitergeleitet wird.

7. Verfahren nach Anspruch 1, **dadurch gekennzeichnet, dass** der Mikro-Controller (1) erkennt oder identifiziert, dass es ein Makro-Blockierproblem gibt, wenn die Anzahl der vertikalen Streifen auf jeder Zeile oder Linie nicht miteinander übereinstimmen.

8. Verfahren nach Anspruch 1, **dadurch gekennzeichnet, dass** der Mikro-Controller (1) eine "kein Signal" Mitteilung auf dem Bildschirm erfasst, wenn der Zähler oder Timer einen Nullwert bei den Zeilen des Frames und/oder andere Zählwerte als jene in dem mittleren Abschnitt des Bildes hat oder zählt.

9. **Testsystem,** ausgebildet oder vorgesehen für Video-Ausgangsgeräte während Entwurfsphasen oder Designstufen, **dadurch gekennzeichnet, dass** das Testsystem umfasst
- einen Videoeingang (7) zum Erhalt eines Testsignals von einem Video-Ausgangsgerät, welches zu testen ist;
- einen Signal-Steuerkreis (3), welcher die DC-Pegel des erhaltenen Testsignals anpasst oder einstellt;
- eine Synchronisations-Splitterschaltung (2), welche das Vertikal- und das Horizontal- Synchronsignal (9, 8) des erhaltenen Testsignals trennt;
- einen Mikro-Controller (1), welcher das Vertikal- und Horizontal-Synchronsignal (9, 8) und das angepasste oder eingestellte Testsignal erhält oder empfängt, welcher Controller das Makro-Blockierproblem und das Frame-Skip-Problem identifiziert, und
zwar im Bild-Eingangssignal oder aufgrund des Bild-Eingangssignals unter Verwendung der Synchronsignale (9, 8) und
des angepassten Testsignals;
wobei...
- der Mikro-Controller keinen Analog-Digital-Wandler (ADC) aufweist und das Makro- Block- und das Frame-Skip-Problem in dem Bild durch Verwenden der Synchronsignale (9, 8) und des angepassten oder eingestellten Bild-Eingangssignals ohne Notwendigkeit der Konvertierung ins Digitale identifiziert;
- das Testsignal aus vertikalen schwarzen und weißen Streifen besteht, die sich nach rechts bewegen, und an einen Clock-Eingang eines Timers im Mikro-Controller (1) geführt wird;
- in dem Einsteilschritt eine positive DC-Komponente zu dem Testsignal addiert wird, und zwar von oder an einem Schaltungseinsatz einer Signal-Steuerschaltung (3), und es von negativen Signalen befreit wird, und zu dem Mikro-Controller (1) übertragen wird;
- der Wechsel von schwarzen und weißen Pegeln im Testsignal von dem oder in dem Mikro-Controller (1) von dem Timer gezählt wird, als Zahl von vertikalen Streifen in dem Testsignal, das sich nach rechts bewegend gestaltet ist, und jeder Zeilenwert gespeichert wird, wenn ein neues Horizontal-Synchronsignal (8) empfangen oder erhalten wird;
- für einen Frame, die gespeicherten Zeilenwerte verglichen werden, um ein Makro- Blocking zu identifizieren;
- für jeden Frame die Zeitdifferenz zwischen jedem Horizontal-Synchronsignal (8) und dem Durchgangs- oder Wechselpunkt berechnet wird, was der Wechsel vom ersten Schwarzen zum Weißen oder vom Weißen zum Schwarzen ist, um ein Image-Freeze (Bildstillstand) zu erkennen.

10. System nach Anspruch 9, **dadurch gekennzeichnet, dass** das User-Interface eine Tastatur und einen LCD-Monitor aufweist.

11. System nach Anspruch 9 oder 10, **dadurch gekennzeichnet, dass** ein 8-bit Mikro-Controller (1) verwendet ist, um Probleme zu erkennen oder zu erfassen, die in dem Testsignal entstehen oder aufscheinen können.

## Revendications

1. Procédé pour tester des dispositifs de sortie vidéo, comprenant les étapes suivantes consistant à
• recevoir un signal de test en provenance d'un dispositif de sortie vidéo à tester via une entrée vidéo (7),
• ajuster les niveaux DC de signal de test reçu,
• séparer les signaux de synchronisation verticaux et horizontaux (9, 8) du signal de test reçu,
• transmettre les signaux de synchronisation verticaux et horizontaux (9, 8) et le signal de test ajusté à un micro-dispositif de commande (1),
• identifier les problèmes de macro-blocage et de saut de trame sur le signal d'entrée d'image par le micro-dispositif de commande (1) en utilisant lesdits signaux de synchronisation (9, 8) et signal de test ajusté,
et **caractérisé en ce que**
• ledit micro-dispositif de commande (1) n'inclut pas de convertisseur analogique-numérique ADC et identifie les problèmes de macro-blocage et de saut de trame sur l'image en utilisant lesdits signaux de synchronisation (9, 8) et le signal d'entrée d'image ajusté sans nécessiter de conversion en numérique,
• le signal de test cité est constitué de bandes verticales noir & blanc se déplaçant vers la droite et est mis en oeuvre sur une entrée d'horloge d'un temporisateur dans le micro-dispositif de commande (1),
• lors de l'étape d'ajustement, une composante DC positive est ajoutée au signal de test cité au niveau d'une entrée de circuit d'un circuit régulateur de signal (3), et est débarrassée de signaux négatifs, et transmise au micro-dispositif de commande (1),
• le changement de niveaux de noir & blanc du signal de test dans le micro-dispositif de commande (1) est compté par le temporisateur comme nombre de bandes verticales dans le signal de test mis en oeuvre tel que se déplaçant vers la droite et chaque valeur de ligne est sauvegardée quand un nouveau signal de synchronisation horizontal (8) est reçu,
• pour une trame, la comparaison de valeurs de ligne sauvegardées afin d'identifier un macro-blocage,
• pour toutes les trames, le calcul de la différence temporelle entre chaque signal de synchronisation horizontal (8) et le point de passage du premier changement de noir à blanc ou de blanc à noir afin d'identifier un gel d'image.

2. Procédé selon la revendication 1, **caractérisé en ce que** le début d'une nouvelle trame est détecté à partir du signal de synchronisation vertical (9).

3. Procédé selon la revendication 1, **caractérisé en ce que** les débuts de lignes sont détectés à partir d'un signal de synchronisation horizontal entrant (8).

4. Procédé selon la revendication 1, **caractérisé en ce que** les signaux de synchronisation mentionnés sont divisés par un circuit diviseur de synchronisation (2).

5. Procédé selon la revendication 1, **caractérisé en ce que** les signaux de synchronisation horizontaux et verticaux divisés (8 et 9) sont mis en oeuvre dans les entrées d'interruption de broche du micro-dispositif de commande (1).

6. Procédé selon la revendication 1, **caractérisé en ce que** la sortie de signal de test est maintenue soumise à des actions de décalage de niveau et d'effet tampon par un circuit régulateur de signal (3) avant d'être transmise au micro-dispositif de commande (1).

7. Procédé selon la revendication 1, **caractérisé en ce que** le micro-dispositif de commande (1) mentionné identifie qu'il y a un problème de macro-blocage si le nombre de bandes verticales sur chaque ligne ne correspond pas.

8. Procédé selon la revendication 1, **caractérisé en ce que** le micro-dispositif de commande (1) détecte le message « aucun signal » sur l'écran quand le temporisateur compte une valeur nulle que les lignes de la trame et/ou compte d'autres valeurs que celles de la partie centrale de l'image.

9. Système de test développé pour des dispositifs de sortie vidéo durant des étapes de conception, **caractérisé en ce qu'**il comprend
• une entrée vidéo (7) pour recevoir un signal de test en provenance d'un dispositif de sortie vidéo à tester,
• un circuit régulateur de signal (3), qui ajuste les niveaux DC de signal de test reçu,
• un circuit diviseur de synchronisation (2), qui sépare les signaux de synchronisation verticaux et horizontaux (9, 8) du signal de test reçu,
• un micro-dispositif de commande (1), qui reçoit des signaux de synchronisation verticaux et horizontaux (9, 8) et un signal de test ajusté, qui identifie les problèmes de macro-blocage et de saut de trame sur le signal d'entrée d'image en utilisant lesdits signaux de synchronisation (9, 8) et signal de test ajusté,
dans lequel
• ledit micro-dispositif de commande (1) n'inclut pas de convertisseur analogique-numérique ADC et identifie les problèmes de macro-blocage et de saut de trame sur l'image en utilisant lesdits signaux de synchronisation (9, 8) et le signal d'entrée d'image ajusté sans nécessiter de conversion en numérique,
• le signal de test cité est constitué de bandes verticales noir & blanc se déplaçant vers la droite et est mis en oeuvre sur une entrée d'horloge d'un temporisateur dans le micro-dispositif de commande (1),
• dans le circuit régulateur de signal (3), une composante DC positive est ajoutée au signal de test cité au niveau d'une entrée de circuit d'un circuit régulateur de signal (3), et est débarrassée de signaux négatifs, et transmise au micro-dispositif de commande (1),
• le changement de niveaux de noir & blanc du signal de test dans le micro-dispositif de commande (1) est compté par le temporisateur comme nombre de bandes verticales dans le signal de test mis en oeuvre tel que se déplaçant vers la droite et chaque valeur de ligne est sauvegardée quand un nouveau signal de synchronisation horizontal (8) est reçu,
• pour une trame, la comparaison de valeurs de ligne sauvegardées afin d'identifier un macro-blocage,
• pour toutes les trames, le calcul de la différence temporelle entre chaque signal de synchronisation horizontal (8) et le point de passage du premier changement de noir à blanc ou de blanc à noir afin d'identifier un gel d'image.

10. Système selon la revendication 9, **caractérisé en ce que** ladite interface utilisateur comprend un clavier et un écran LCD (affichage à cristaux liquides).

11. Système selon la revendication 9 ou la revendication 10, **caractérisé en ce qu'**un micro-dispositif de commande de 8 bits (1) est utilisé pour détecter les problèmes qui peuvent apparaître dans le signal de test.
